# EUROPEAN PATENT APPLICATION

(11) **EP 4 265 561 A1**
(43) Date of publication of application: **25.10.2023**
(21) Application number: 22168870.8
(22) Date of filing: 19.04.2022
(51) Int. Cl.: B67D 1/00, B67D 1/08, B67D 3/00

(54) **COOLING BEVERAGE CONCENTRATE IN A BEVERAGE DISPENSER**

(71) Applicant: Heineken Supply Chain B.V., 1017 ZD Amsterdam (NL)
(72) Inventor: BROUWER, Eric Richard, 1017 ZD Amsterdam (NL); BAX, Bart Jan, 1017 ZD Amsterdam (NL); OTTO, Jeroen Frank, 1017 ZD Amsterdam (NL); PAAUWE, Arie Maarten, 1017 ZD Amsterdam (NL)
(74) Representative: V.O.

(57) **Abstract**

A method of dispensing a post-mixed beverage from a beverage concentrate is provided. The method comprises the steps of receiving a cartridge comprising a volume of beverage concentrate in a receptacle of a beverage dispenser, using a cooling unit of the beverage dispenser, cooling the beverage concentrate to a temperature below a beverage concentrate temperature threshold, mixing at least part of the cooled beverage concentrate with one or more volumes of base liquid to form a volume of post-mixed beverage, and dispensing at least part of the volume of post-mixed beverage.

## Description

### TECHNICAL FIELD

The aspects and embodiments thereof relate to the field of dispensing a post-mixed beverage formed by mixing a beverage concentrate with a base liquid.

### BACKGROUND

Beverages, such as soft drinks, beers, and cocktails can be consumed at locations different from the location where they are produced. As such, the beverages have to be transported. In order to reduce the mass and volume to be transported, it has been suggested to concentrate the beverage - i.e. reduce the water content - prior to transport. The beverage concentrate may be mixed with a base liquid to obtain a post-mixed beverage, with a concentration, consistency and flavour approximating the concentration, consistency and flavour of the original beverage.

A cartridge, otherwise referred to as container, pod, pouch, or capsule, may be used as a vessel for holding the beverage concentrate. A user may provide the cartridge to a beverage dispenser, in which the concentrate may be mixed with a base liquid such as water.

### SUMMARY

Many beverages are preferably consumed at a desired drinking temperature below ambient temperature, for example below 10 degrees C, below 5 degrees C, or even near 0 degrees C.

It has been observed that the temperature of a post-mixed beverage dispensed obtained by mixing a volume of beverage concentrate and a volume of base liquid depends on the temperature of both the beverage concentrate and the base liquid.

When the base liquid is water, carbonated water, essentially consists of water, or comprises more than 95% water, the base liquid may only be cooled to a temperature above 0 degrees C, to prevent the base liquid from freezing. In practice, a safety margin may even be applied to ensure that freezing of the base liquid is prevented, and as such the temperature of the base liquid may be well above 0 degrees C, for example above 2 degrees C or even above 4 degrees C. In general, one or more base liquids may be used to form the post-mixed beverage. Other examples of base liquids are ethanol, and ethanol dissolved in water.

The base liquid can be cooled using a beverage dispenser. As such, a controller comprised by the beverage dispenser may control the temperature of the base liquid. The cartridge holding the beverage concentrate is however provided to the beverage dispenser by the user, and as such the controller of a beverage dispenser may have no control over the temperature of the beverage concentrate.

When the temperature of the beverage concentrate is too high and/or when the ratio between the beverage concentrate and the base liquid is too high, the temperature of the post-mixed beverage may be above a desired temperature. Here, the temperature of the beverage concentrate being too high may imply that the desired temperature of the post-mixed beverage cannot be achieved due to the temperature of the beverage concentrate prior to being mixed into the post-mixed beverage being too high. It may not be possible to compensate this high temperature of the beverage concentrate by a lower temperature of the one or more base liquids, for example due to the base liquid freezing below a certain temperature and/or the capacity of a beverage dispenser to cool a base liquid below a certain temperature.

The ratio between the beverage concentrate and the base liquid may be particularly relevant when the heat capacity of the beverage concentrate is higher than the heat capacity of the base liquid. The heat capacity of the beverage concentrate may be higher due to the beverage concentrate typically having a higher concentration of alcohol and/or dissolved components such as sugars, protein, and/or aromatics than the base liquid. Heat capacity may in general be expressed in joule per Kelvin per kilogram.

It is an aim to provide post-mixed beverages at a desired drinking temperature. In particular, it is preferred to dispense a post-mixed beverage formed from a beverage concentrate and one or more base liquids at a desired drinking temperature, wherein the beverage concentrate is in particular based on a fermented beverage or resembles a fermented beverage.

A first aspect provides a method of dispensing a post-mixed beverage comprising the steps of receiving a cartridge comprising a volume of beverage concentrate in a receptacle of a beverage dispenser, using a cooling unit of the beverage dispenser, cooling the beverage concentrate to a temperature below a beverage concentrate temperature threshold, mixing at least part of the cooled beverage concentrate with a volume of base liquid to form a volume of post-mixed beverage, and dispensing at least part of the volume of post-mixed beverage.

By cooling the beverage concentrate using the cooling unit of the beverage dispenser, the temperature of the beverage concentrate can be controlled. By being able to control the temperature of the beverage concentrate, the temperature of the dispensed post-mixed beverage can be controlled better, in particular when the temperature of the base liquid or base liquids can be controlled as well by the beverage dispenser. In particular, the temperature of the dispensed post-mixed beverage may become less dependent or even independent of the temperature of the cartridge when received by the beverage dispenser.

The beverage concentrate may be based on a fermented beverage, such as a beer, wine or a cider. The beverage concentrate may as such comprise water with particles dissolved and/or suspended therein. The particles may be or comprise one or more proteins, sugars, organic compounds such as polyphenols and/or aromatics. As options, the beverage concentrate may be essentially free of ethanol or comprise a particular concentration of ethanol, such as 25% or less, 10% or less, 5% or less, or even 1% or less by volume. As a further option, the beverage concentrate may comprise dissolved carbon dioxide.

A beverage concentrate based on a fermented beverage may be obtained by concentrating a fermented beverage, and/or by brewing a fermented beverage with a high concentration of flavouring agents. The high concentration of flavouring agents is than higher that a typical concentration of flavouring agents for said fermented beverage. For example, when the beverage concentrate comprises four times the flavouring agents per volume compared to a conventional beverage, the concentrate has to be diluted four times to obtain the desired concentration of flavouring agents.

The high concentration of flavouring agents may result in a high dry matter content in the beverage concentrate, which is higher than a typical dry matter content in a conventional beverage. The high concentration of flavouring agents may be obtained by brewing the fermented beverage with a higher concentration of raw materials such as cereal grains, for example malted barley, wheat, or maize, and/or hops compared to the concentration of raw materials used for brewing a conventional beverage which is typically not mixed with a base liquid before consumption.

The beverage concentrate may in general comprise one or more flavouring agents, for example aimed to mimic the flavour of another beverage. In particular, flavouring agents may be used to mimic the flavour of a fermented beverage, such as a beer, wine, or a cider. A flavouring agent may for example be an aromatic compound, an ester or an alcohol. By mixing one or more flavouring agents, in particular into an aqueous solution, a beverage concentrate may be obtained. It will thus be understood that a beverage concentrate may also be formed without a brewing or fermenting process.

Examples of beverage concentrate may be cooled to a temperature below 0 degrees C without freezing, by virtue of the particles dissolved in the beverage concentrate. The beverage concentrate temperature threshold may hence be above 0 degrees C, at 0 degrees C, or below 0 degrees C.

The one or more base liquids with which the beverage concentrate is mixed to form the post-mixed beverage may comprise water, carbonated water and/or ethanol. In embodiments, the base liquid may be a beverage, such as a beer, cider, wine, any other fermented beverage, or any other beverage such as a spirit or liquor. The beverage concentrate may be used to add additional flavours to the base liquid. The beverage concentrate may in general be mixed with more than one type of base liquid, originating from more than one source of base liquid. For example, water and ethanol may be provided separately before being mixed with the beverage concentrate.

The cooling unit of the beverage dispenser generally refers to any component of the beverage dispenser contributing to the process of cooling the beverage concentrate. For example, the cooling unit may comprise a thermoelectric cooler for cooling based on the Peltier effect. As another example, the cooling unit is arranged to cool based on vapour compression refrigeration. As such, the cooling unit may comprise one or more of a compressor, evaporator, condenser and expansion valve. A cooling fluid such as a cooling liquid such as water or glycol or a cooling gas such as CO2 may be used in the vapour compression refrigeration cycle.

Alternatively, the cooling unit is arranged to receive a cooled medium such as a cooled fluid, liquid, and/or gas cooled by an external cooling unit not comprised by the beverage dispenser. The cooled medium may be used by the cooling unit to withdraw thermal energy from the beverage concentrate.

The cooling unit may comprise one or more heat exchangers for withdrawing thermal energy from the beverage concentrate. The cooling fluid may be circulated through the cooling unit and through the one or more heat exchangers. A heat exchanger may for example be a tube-in-tube heat exchanger.

As a particular option, the beverage concentrate is cooled while inside the cartridge. The beverage concentrate may be cooled indirectly by the cooling unit of the beverage dispenser, for example when the cooling unit cools part of the cartridge, when the cooling unit cools the surroundings of the cartridge, and/or when the cooling unit cools part of the receptacle in which the cartridge is positioned.

To enable or improve transfer of heat from the beverage concentrate to a heat exchanger of the cooling unit, the cartridge may comprise one or more thermally conductive elements, comprising thermally conducting material. In particular, the thermally conducting material may extend between an internal volume of the cartridge in which the beverage concentrate is present and an outer surface of the cartridge

Examples of suitable thermally conducting materials are metals such as aluminium, copper, stainless steel, or any other thermally conducting food grade materials, which may include other materials than metals.

In addition to or alternatively to being cooled while inside the cartridge, the beverage concentrate may be cooled after being expelled from the cartridge, but prior to the mixing of the beverage concentrate with the base liquid. For example, the expelled beverage concentrate may flow through a conduit from which thermal energy can be withdrawn using the cooling unit.

Typically, the one or more base liquid(s) form the majority of the volume of the post-mixed beverage. As such, the temperature of the post-mixed beverage may be primarily determined by the temperature of the one or more base liquid(s). At least one of the one or more base liquid(s) may thus be cooled prior to being mixed into the post-mixed beverage. In general, whenever herein reference is made to a base liquid, also embodiments wherein multiple base liquids are used to form the post-mixed beverage are considered. Examples of base liquids include but are not limited to water, carbonated water, ethanol, and ethanol dissolved in water.

The temperature of the beverage concentrate as the cartridge is provided to the beverage dispenser may thus be higher, even significantly higher by at least 5 degrees C, 10 degrees C, 15 degrees C or even 20 degrees C or more than the temperature of the base liquid prior to the forming of the post-mixed beverage. A temperature difference between the beverage concentrate and a cooling medium or cooling element of the cooling unit may be higher than a temperature difference between the post-mixed beverage and a cooling medium or cooling element of the cooling unit, in particular when the base liquid is cooled prior to being mixed into the post-mixed beverage.

It may be preferred to cool the beverage concentrate prior to mixing the beverage concentrate with the one or more base liquids, to make use of the higher temperature difference. The rate of thermal energy transfer, for example by conduction, convection, and/or radiation, increases with an increase in the temperature difference between two media between which the thermal energy is transferred. A higher rate of thermal energy transfer may be preferred, to decrease the amount of time required to cool the beverage concentrate, and hence to dispense the post-mixed beverage at the desired drinking temperature.

When the method comprises a step of determining a temperature of the base liquid, the beverage concentrate temperature threshold may be at least partially based on the determined temperature of the base liquid. For example, when the temperature of the base liquid is higher, the beverage concentrate temperature threshold may become lower to end up with the desired beverage temperature of the post-mixed beverage. When the temperature of the base liquid is lower, less cooling of the beverage concentrate may be required to obtained up with the desired beverage temperature of the post-mixed beverage, which may decrease the time required to dispense the post-mixed beverage.

The temperature of the one or more base liquids may be determined at or near their respective base liquid source, such as a water line or a water container, which water container may be comprised by the beverage dispenser or may be an external water container. It is also envisioned that a base liquid may be cooled, and the temperature of the base liquid is determined after the cooling of the base liquid. The temperature of the base liquid after cooling may substantially correspond to the temperature of the base liquid when mixed with the beverage concentrate.

Embodiments of the method may further comprise a step of determining a temperature of the beverage concentrate inside the cartridge. The temperature of another part of the cartridge, such as an outer surface of the cartridge, may be used to approximately determine the temperature of the beverage concentrate inside the cartridge.

Additionally or alternatively, embodiments of the method may further comprise a step of determining a temperature of the beverage concentrate after being expelled from the cartridge, and prior to being mixed with the one or more base liquids.

Based on the determined temperature of the beverage concentrate inside the cartridge, a beverage dispenser controller may proceed with one or more actions. These actions may include, when the controller determines that the temperature of the beverage concentrate inside the cartridge is below the beverage concentrate temperature threshold: expelling the beverage concentrate from the cartridge, stopping the cooling unit with the cooling of the beverage concentrate, providing an audible and/or visual signal to a user indicative of the temperature of the beverage concentrate being below the beverage concentrate temperature threshold and/or providing one or more base liquids in contact with the beverage concentrate to mix into the post-mixed beverage.

When the beverage dispenser comprises a cooling unit, the cooling unit may be used for cooling at least one of one or more base liquids, next to using the cooling unit for cooling the beverage concentrate. At least one component of the cooling unit may be used both for cooling the base liquid and the beverage concentrate, such as a compressor of the cooling unit. This may allow a more compact and/or economic beverage dispenser to be obtained.

A ratio between the beverage concentrate and the base liquid in the post-mixed beverage may be 1:5 or more, in particular 1:4 or more, or even 1:3 or more. This ratio may be higher for beverage concentrates based on fermented beverages than for example for beverage concentrates based on soda drinks. Beverage concentrates based on fermented beverage often comprise a greater variety of dissolved compounds such as proteins, sugars, flavouring agents and/or aromatics, which may make it more difficult to obtain a high concentration beverage concentrates which provides the desired flavour after being mixed into the post-mixed beverages.

When multiple base liquids are mixed with the beverage concentrate, the ratio between the beverage concentrate and the total volume of base liquids in the post-mixed beverage may be 1:5 or more, in particular 1:4 or more, or even 1:3 or more. For example, both water and alcohol as base liquids may be mixed with a beverage concentrate to obtain an alcoholic post-mixed beverage.

In general, in the method, a single-serve cartridge for serving a single quantity of post-mixed beverage may be used, or a multi-serve cartridge for serving several distinct quantities of post-mixed beverage may be used. Both the single-serve and the multi-serve cartridges may be disposable, i.e. discarded after the beverage concentrate has been expelled from said cartridges.

In case of a single-serve cartridge, the cartridge is filled with a volume of beverage concentrate sufficient to obtain a single quantity of post-mixed beverage. The single quantity may correspond to amount of beverage concentrate required to obtain a typical filling volume of a beverage container such as a glass, which quantity may for example be 200 mL, 250 mL, 300 mL, 500 mL, or 568 mL (i.e. 1 pint), when the beverage concentrate is mixed with a volume of one or more base liquids. To obtain the single quantity of post-mixed beverage, the cartridge may comprise between 10 mL - 150 mL of beverage concentrate, in particular between 20 mL - 100 mL, between 30 mL - 80 mL, or even between 50 mL - 70 mL of beverage concentrate. The single quantity of post-mixed beverage is preferably dispensed in a single continuous dispensing action.

In case of a multi-serve cartridge, post-mixed beverage is dispensed in a plurality of distinct dispensing actions. Per distinct dispensing action, a single quantity of post-mixed beverage may be dispensed, which single quantity may correspond to amount of beverage concentrate required to obtain a typical filling volume of a beverage container such as a glass, which quantity may for example be 200 mL, 250 mL, 300 mL, 500 mL, or 568 mL (i.e. 1 pint).

The volume of beverage concentrate in a multi-serve cartridge corresponds to the volume of beverage concentrate required to obtain a plurality of single quantities of post-mixed beverage. For example, for a single multi-serve cartridge, more than 1L, more than 2.5L, more than 5L, more than 10L, or even more than 20L of post-mixed beverage may be obtained.

A multi-serve cartridge may remain inside the receptacle of the beverage dispenser for a longer time than a single-serve cartridge. For example, a multi-serve cartridge may remain inside the receptacle for several hours, an evening, more than a day, several days, or even more than a week. It is preferred to keep the temperature of the beverage concentrate inside the cartridge below a storage threshold temperature, which storage threshold temperature may correspond to or be higher than the beverage concentrate temperature threshold. In particular after the multi-serve cartridge is first used, for example when a seal is broken, it may be preferred to keep the temperature of the beverage concentrate inside the cartridge below a storage threshold temperature to prevent or reduce spoilage of the beverage concentrate.

In general, beverage concentrate and one or more base liquids may be mixed inside a mixing chamber or mixing conduit comprised by the beverage dispenser. Alternatively, beverage concentrate and one or more base liquids may be mixed inside the cartridge itself, which cartridge may be an expandable cartridge arranged to receive a volume of base liquid therein next to the volume of beverage concentrate.

When the beverage concentrate and the one or more base liquids are mixed inside the cartridge itself, the cartridge with the beverage concentrate and one or more base liquids inside may be cooled by the cooling unit of the beverage dispenser.

A second aspect provides a beverage dispenser for dispensing a post-mixed beverage, which beverage dispenser is arranged for cooling beverage concentrate. The beverage dispenser is in particular arranged for cooling beverage concentrate before the beverage concentrate is mixed into the post-mixed beverage. The beverage dispenser comprises a receptacle with a reception volume for receiving at least part of a cartridge holding a volume of beverage concentrate, and a base liquid input for receiving one or more base liquids.

The beverage dispenser further comprises a cooling unit for withdrawing thermal energy from the reception volume and/or for withdrawing thermal energy from a beverage concentrate conduit comprised by the beverage dispenser, which beverage concentrate conduit is in fluid communication with the reception volume for receiving beverage concentrate from a cartridge position in the reception volume.

It will be understood that embodiments of the beverage dispenser are envisioned which do not comprise a beverage concentrate conduit. Instead, for example, an expandable cartridge may be used as a mixing chamber for mixing beverage concentrate and one or more base liquids in. The post-mixed beverage may be formed in said expandable cartridge, and directly dispensed from the expandable cartridge into a glass or other beverage container.

By virtue of the beverage dispenser, thermal energy may be withdrawn from the beverage concentrate before the beverage concentrate is mixed with the one or more base liquids, which beverage concentrate may be present inside the cartridge or in a conduit or other storage volume of the beverage dispenser.

When the cooling unit is arranged for withdrawing thermal energy from the reception volume, the cooling unit is arranged for withdrawing thermal energy from a cartridge present in the reception volume, and thus from the beverage concentrate held in the cartridge present in the reception volume.

The cooling unit, or parts thereof, may be further arranged for cooling base liquid flowing through the base liquid conduit and/or for cooling the post-mixed beverage prior to the dispensing of the post-mixed beverage. As such, a more compact and/or less complex beverage dispenser may be obtained.

In general, embodiments of the beverage dispenser may comprise any number of temperature sensors, arranged for obtaining temperature information of the beverage concentrate, a base liquid, or the post-mixed beverage. Furthermore, in general, embodiment of the beverage dispenser may comprise any number of pumps for transporting beverage concentrate, and one or more base liquids through the beverage dispenser.

As a particular option, embodiments of the beverage dispenser may further comprise a storage compartment for holding a plurality of cartridges each holding a volume of beverage concentrate, and wherein the cooling unit is arranged for cooling the plurality of cartridges held in the storage compartment. As such, the beverage dispenser may act as a fridge for the cartridges. A user may obtain a pre-cooled cartridge from the storage compartment, and subsequently use the beverage dispenser to dispense a post-mixed beverage using beverage concentrate from the pre-cooled cartridge.

It will thus be understood that embodiments of the beverage dispenser are envisioned which are arranged for cooling beverage concentrate in a cartridge which cartridge is not yet positioned in the receptacle, and which thus is yet to be transported to the receptacle in order to expel the beverage concentrate from the cartridge.

A third aspect provides a beverage dispenser assembly for forming and dispensing a post-mixed beverage from a beverage concentrate. The beverage dispenser assembly comprises a beverage dispenser, in particular according to the second aspect. The beverage dispenser assembly further comprises a cartridge holding a volume of beverage concentrate, wherein the cartridge is positioned in the receptacle of the beverage dispenser.

### BRIEF DESCRIPTION OF THE FIGURES

In the figures,
Fig. 1A shows a schematic view of an embodiment of a beverage dispenser assembly;
Fig. 1B shows a schematic view of another embodiment of a beverage dispenser assembly;
Fig. 2A shows a schematic view of yet another embodiment of a beverage dispenser assembly;
Fig. 2B shows a schematic view of a further embodiment of a beverage dispenser assembly; and
Fig. 3 shows a schematic view of an even further embodiment of a beverage dispenser assembly.

### DETAILED DESCRIPTION OF THE FIGURES

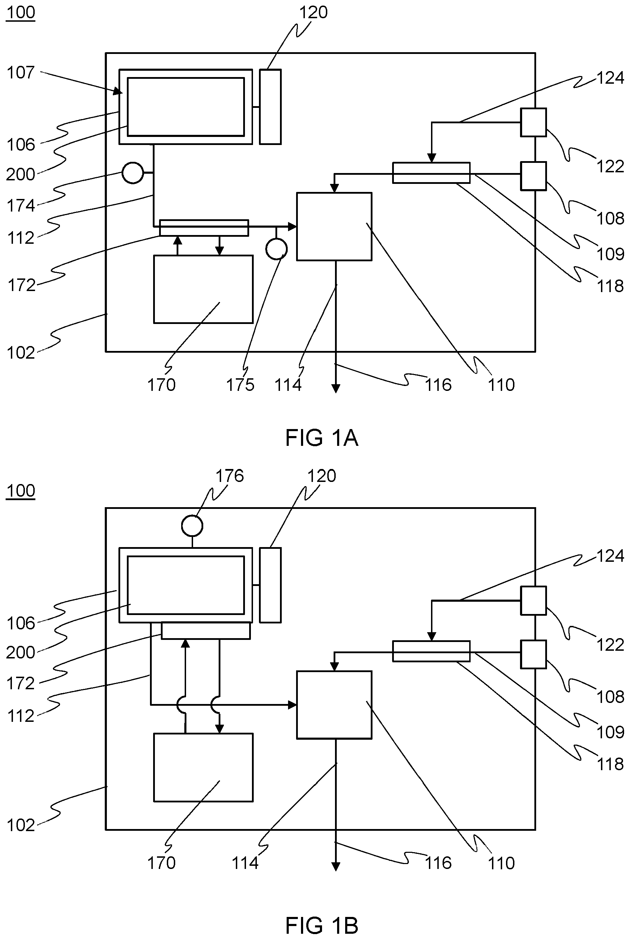

Fig. 1A shows a schematic view of an embodiment of a beverage dispenser assembly 100. The beverage dispenser assembly 100 comprises an embodiment of a beverage dispenser 102. In general, a beverage dispenser 102 may for example be a table-top dispenser for consumer use. Alternatively, a beverage dispenser 102 may be for commercial use, for example at a bar.

The beverage dispenser 102 comprises a receptacle 106 with a reception volume 107 in which an embodiment of a cartridge 200 is positioned. The cartridge 200 holds a volume of beverage concentrate. The beverage dispenser 102 further comprises a base liquid input 108 for receiving a base liquid. The base liquid input 108 may for example be connectable to a base liquid source, such as a faucet supplying tap water or a container comprised by the beverage dispenser. In other embodiments, the beverage dispenser 102 may comprise multiple separate base liquid inputs for receiving multiple base liquids from different base liquid sources.

The cartridge 200 may for example be a cartridge comprising a filter, and/or an expandable cartridge according to any embodiment disclosed herein.

A carbonator 118 may be comprised by the beverage dispenser 102, to form a carbonated base liquid. The carbonator 118 may for example be positioned in-line with the base liquid conduit 109. To provide a gas such as CO2 to the carbonator 118, the beverage dispenser 102 comprises a gas inlet 122 and a gas conduit 124 for transporting gas from the gas inlet 122 to the carbonator 118.

As a particular option depicted in Fig. 1A, the beverage dispenser 102 comprises a mixing chamber 110, which is in fluid communication with the base liquid input 108 via a base liquid conduit 109 and is also in fluid communication with the cartridge 200 via a beverage concentrate conduit 112. The mixing chamber 110 can thus receive base liquid and beverage concentrate, and inside the mixing chamber 110, the base liquid and beverage concentrate may mix to form the post-mixed beverage. From the mixing chamber 110, via a post-mixed beverage conduit 114, the post-mixed beverage may be dispensed via a dispensing outlet 116. For expelling the beverage concentrate from the cartridge 200, the beverage dispenser 102 comprises an optional expelling actuator 120.

In the embodiment of the beverage dispenser 102 shown in Fig. 1A, the beverage dispenser 102 comprises a cooling unit 170 with a heat exchanger 172. The heat exchanger 172 is in this embodiment positioned downstream of the cartridge 200, and upstream of the mixing chamber 110. As such, thermal energy may be withdrawn from beverage concentrate flowing through the beverage concentrate conduit 112 from the cartridge 200 to the mixing chamber 110.

In general, a beverage dispenser 102 may comprise one or more temperature sensors. A temperature sensor may be arranged for determining or estimating a temperature, for example a temperature of the beverage concentrate or base liquid, at a particular location.

Fig. 1A shows a beverage concentrate temperature sensor 174 as an example, which is arranged for determining a temperature of the beverage concentrate downstream of the cartridge 200, and upstream of the heat exchanger 172. A further beverage concentrate temperature sensor 175 may be comprised by the beverage dispenser 102, for determining a temperature of the beverage concentrate downstream of the heat exchanger 172.

The cooling unit 170 may in general be controlled at least partially based on temperature data obtained by one or more temperature sensors comprised by the beverage dispenser 102.

Fig. 1B shows a beverage dispenser assembly 100 comprising an alternative embodiment of the beverage dispenser 102, wherein the heat exchanger 172 is arranged for withdrawing thermal energy from the reception volume 107 of the receptacle, in particular from the cartridge 200, and even more in particular from beverage concentrate held in the cartridge 200.

The heat exchanger 172 and the cartridge 200 may in use be in direct contact, such that thermal energy can be transferred by virtue of conduction. Alternatively and/or additionally, radiation and/or convection may be used to transfer thermal energy from the cartridge 200 to the heat exchanger 172.

In use, the temperature of the heat exchanger 172 may be lower than the temperature of the cartridge 200, in particular lower than the temperature of the beverage concentrate held in the cartridge 200. The temperature of the heat exchanger 172 may be controlled by the cooling unit 170, for example by circulating a cooling fluid through the cooling unit and the heat exchanger 172. The cooling fluid may comprise one or more liquids and/or one or more gasses. When the cooling unit 170 comprises one or more thermoelectric coolers, no cooling fluid may be required.

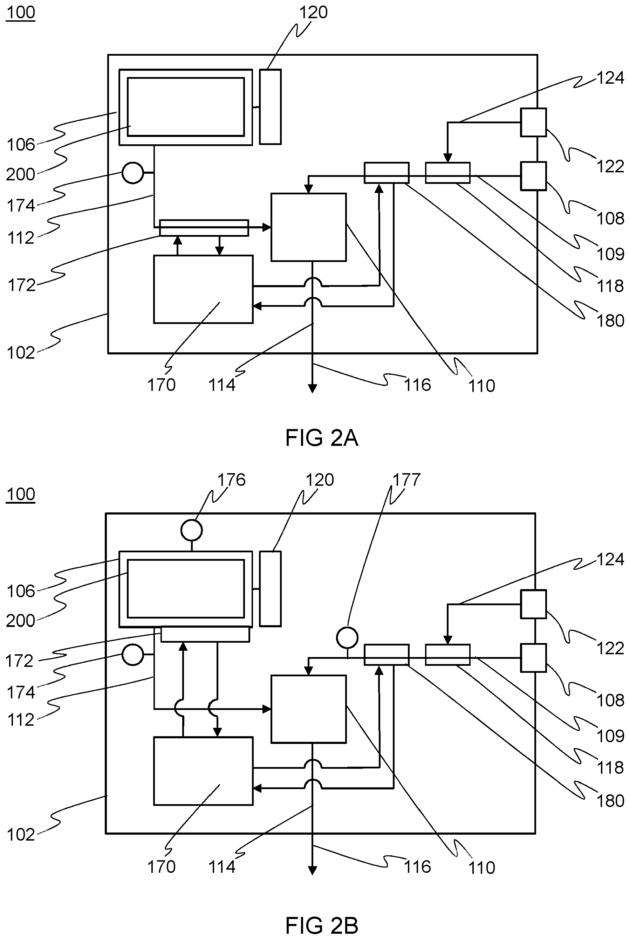

Fig. 2A shows a schematic view of yet another embodiment of a beverage dispenser assembly 100, comprising a further embodiment of the beverage dispenser 102. Compared to the embodiment of the beverage dispenser 102 depicted in Fig. 1A, in the embodiment of the beverage dispenser shown in Fig. 2A, the cooling unit 170 is also used for cooling the base liquid. To this end, a base liquid heat exchanger 180 is comprised by the beverage dispenser 102.

The base liquid heat exchanger 180 is arranged to withdraw thermal energy from base liquid flowing through the base liquid conduit 109, in particular between the base liquid input 108 and the mixing chamber 110. To this end, for example, cooling fluid may be circulated through the cooling unit and the base liquid heat exchanger 180. In this embodiment, the cooling unit 170 is thus arranged to cool both the base liquid and the beverage concentrate.

Fig. 2B schematically depicts a beverage dispenser assembly 100, with yet another embodiment of the beverage dispenser 102. In this particular embodiment of the beverage dispenser 102, the cooling unit 170 is arranged to both cool base liquid in the base liquid conduit 109 and beverage concentrate held in a cartridge 200 in the receptacle 106.

As a further option, applicable to any embodiment of a beverage dispenser 102, a base liquid temperature sensor 177 is provided for determining a temperature of the base liquid. In particular, the base liquid temperature sensor 177 may be arranged for determining a temperature of the base liquid downstream of the base liquid heat exchanger 180, as shown in Fig. 2B. Alternatively, or additionally, the base liquid temperature sensor 177 or any other temperature sensor may be used for determining a temperature of the base liquid at other locations, for example upstream of the base liquid heat exchanger 180, at the base liquid input 108, or even upstream of the base liquid input 108.

In general, when the beverage dispenser 102 comprise a base liquid container for storing a volume of base liquid in, the cooling unit may be arranged for cooling base liquid stored in the base liquid container.

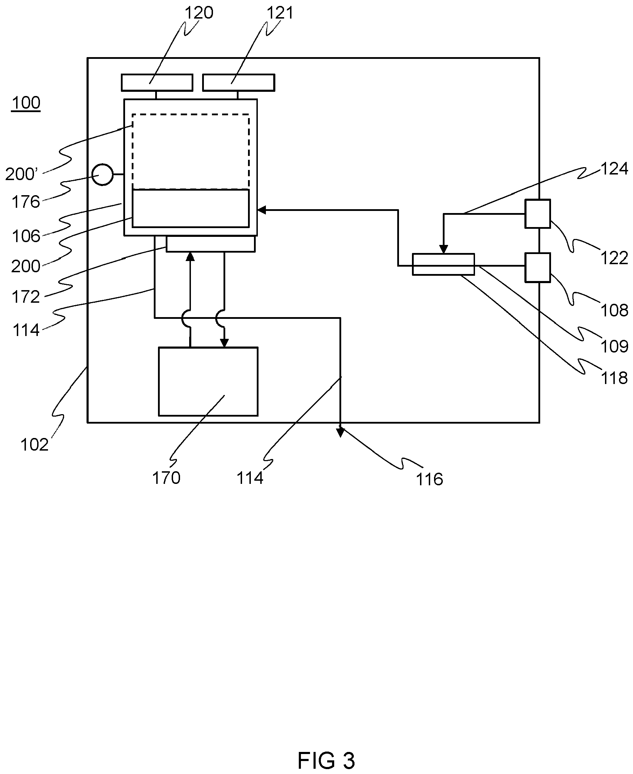

Fig. 3 shows yet another beverage dispenser assembly 100, with yet another embodiment of the beverage dispenser 102 and another embodiment of the cartridge 200. In this embodiment of the assembly 100, the beverage dispenser 102 comprises a receptacle 106 with a reception volume in which a cartridge 200 may be positioned, for example by a user. The cartridge 200 holds a volume of beverage concentrate. The beverage dispenser 102 further comprises a base liquid input 108 for receiving a base liquid. The base liquid input 108 may for example be connectable to a base liquid source, such as a faucet supplying tap water or a container comprised by the beverage dispenser.

For expelling the beverage concentrate from the cartridge 200, the beverage dispenser 102 comprises an expelling actuator 120. The expelling actuator 120 may for example be arranged to be moved towards the cartridge 200, and in particular squeeze, collapse, and/or crush the cartridge 200 into the emptied state. Alternatively, or additionally, the expelling actuator 120 may be arranged to suck post-mixed beverage from the cartridge 200, which may cause the cartridge 100 to become collapsed into the emptied state, for example using the Venturi effect.

In the embodiment of Fig. 3, the cartridge 200 holding the beverage concentrate is an expandable cartridge. Using an expandable cartridge may eliminate the need for a separate mixing chamber. In Fig. 3, the cartridge 200 is shown in an unexpanded state with a solid line, and in an expanded state with the dashed line 200'.

Instead of the separate mixing chamber 110, in the embodiment of Fig. 3, the expandable cartridge 200 is used as a mixing chamber in which the post-mixed beverage is formed by mixing beverage concentrate and base liquid. To this end, the base liquid input 108 is in fluid communication with the receptacle 106 in which the expandable cartridge 200 is positioned to supply base liquid to the expandable cartridge 200, for example to a fluid passage of the expandable cartridge 200.

A post-mixed beverage conduit 114 is positioned in fluid communication with the receptacle 106, to receive post-mixed beverage from the expandable cartridge 200. Via the post-mixed beverage conduit 114, the post-mixed beverage can be dispensed through the dispensing outlet 116 at a downstream end of the post-mixed beverage conduit 114. The post-mixed beverage conduit 114 may be comprised by the beverage dispenser 102, or by the cartridge 200. The post-mixed beverage conduit 114 may at least partially be a flexible conduit, in particular when comprised by the cartridge 200 to allow a user to correctly position the post-mixed beverage conduit 114 relative to the beverage dispenser 102. Alternatively, the post-mixed beverage conduit 114 may be a rigid conduit, for example a rigid outlet spout comprised by the cartridge 200.

As an option schematically shown in Fig. 3, the beverage dispenser 102 may comprise an optional agitation unit 121. The agitation unit 121 is generally arranged for agitating a liquid inside the expandable cartridge.

In the assembly 100 of Fig. 3, the cartridge 200 comprises an expandable housing. As an option, the expandable housing comprises a foldable housing part. The foldable housing part may be folded out and away from an internal volume of the cartridge when the expandable housing is manipulated from the unexpanded state to the expanded state.

In general, the foldable housing part of the expandable housing may be formed as a bellow, arranged to be expanded to accommodate a larger volume of fluid in the internal volume. The larger volume may for example be caused by base liquid being pumped or sucked into the internal volume, and/or by beverage concentrate being pumped or sucked into the internal volume. A bellow may comprise a plurality of pleats arranged to fold relative to each other.

As a further option, at least part of the expandable housing comprises a stretchable material, arranged to stretch by virtue of a pressure difference between a pressure inside the internal volume and the pressure outside the expandable housing. For example, when a pressure inside the internal volume exceeds a pressure outside the expandable housing, the stretchable material stretches out and as such, the internal volume increases. The pressure inside the internal volume may for example be increased by virtue of a pump pumping base liquid into the internal volume.

An expandable housing comprising a stretchable material may function similar to a balloon, which when inflated accommodates a larger volume of fluid compared to a deflated state. When a pressure inside the internal volume equals a pressure outside the housing, and no external forces are applied to the housing, the stretchable part of the housing may be in a resting state - e.g. not elastically deformed.

In general, for an expandable cartridge, it may be required that the internal volume can be first filled with a volume of beverage concentrate, for example at a filling plant. Next, the internal volume is further filled with a volume of base liquid, for example by a beverage dispenser at a consumer's home or at a commercial location such as a bar. As such, a post-mixed beverage is formed in the internal volume, which post-mixed beverage comprises the base liquid and the beverage concentrate. Finally, the internal volume has to be at least partially emptied, by expelling the post-mixed beverage from the internal volume. It is hence understood that the expandable cartridge may comprise one or more fluid inlets and one or more fluid outlets, wherein in particular embodiments a fluid inlet may also be used as a fluid outlet.

In general, when the cartridge 200 comprises a substantially rigid, non-expandable housing part, the one or more fluid inlets and/or the one or more fluid outlets may be provided by or through the non-expandable housing part. As such, when the cartridge 200 is manipulated from the unexpanded state to the expanded state, the position and/or orientation of the one or more fluid inlets and/or the one or more fluid outlets may remain unchanged relative to the receptacle of the beverage dispenser. Alternatively, the one or more fluid inlets and/or the one or more fluid outlets may be provided by or through an expandable housing part. For example, a fluid inlet with which the cartridge is filled with beverage concentrate may be provided by or through an expandable housing part.

In general, when the cartridge 200 is an expandable cartridge, in the unexpanded state, the internal volume of the cartridge, which is the volume available for liquid, may be between 30 mL and 150 mL, or may even be larger than 150 mL, even larger than 500 mL or larger than 1000 mL, and is filled with beverage concentrate. In the expanded state, the internal volume 102 may be between 250 mL and 500 mL, or even between 500 mL and 2500 mL, or even larger than 2500 mL or even larger than 5000 mL, and is filled with beverage concentrate and base liquid. In the emptied state, the internal volume 102 may be less than 30 mL, less than 10 mL, or even approximately 0 mL, such that no or essentially no beverage is left behind in the cartridge 100. The ratio between the internal volume in the unexpanded state and the internal volume in the expanded state may depend on a desired mixing ratio between the beverage concentrate and the base liquid. The volumes disclosed in this paragraph may be generally applied to any other embodiment of the cartridge 200 disclosed herein.

The expandable cartridge 200 may be cooled while positioned in the receptacle, using the cooling unit 170 and heat exchanger 172. As such, the contents of the cartridge may be cooled. For example, beverage concentrate inside the cartridge may be cooled prior to adding one or more base liquids into the cartridge. Additionally, or alternatively, after at least part of the one or more base liquids have been added into the cartridge, the post-mixed beverage formed inside the cartridge may be cooled by the cooling unit 170 - prior to the post-mixed beverage being dispensed.

By cooling the beverage concentrate using the cooling unit of the beverage dispenser, the temperature of the beverage concentrate can be controlled. By being able to control the temperature of the beverage concentrate, the temperature of the dispensed post-mixed beverage can be controlled better, in particular when the temperature of the base liquid or base liquids can be controlled as well by the beverage dispenser. In particular, the temperature of the dispensed post-mixed beverage may become less dependent or even independent of the temperature of the cartridge when received by the beverage dispenser.

By cooling post-mixed beverage formed inside the cartridge, the shelf life of post-mixed beverage may be increased, and the post-mixed beverage may be dispensed over a larger amount of time with reduced reduction in quality. Furthermore, cooling the cartridge by the beverage dispenser may allow post-mixed beverage may be dispensed on demand at a preferred temperature, for example below 10 degrees C, below 6 degrees C, or even below 2 degrees C.

In embodiments, the carbonator 118 may be used to carbonate a base liquid, prior to mixing the base liquid with the beverage concentrate. However, in other embodiments, the carbonator 118 may be used to carbonate the post-mixed beverage. As such, it may be possible to provided substantially non-carbonated base liquid to the mixing chamber or to the expandable capsule.

In general, any of the cartridges disclosed herein may comprise a filter designed for filtering suspended particles from beverage concentrate or post-mixed beverage passing through the filter. Filtering suspended particles may result in a post-mixed beverage with a lower turbidity.

Many different types of filters are envisioned. The filter may for example be a semi-permeable filter, such as a paper filter. In general, a semi-permeable filter may allow passage of a liquid, while blocking passage of solids by catching solids in the filter. Depending on the size of the solids, the solids may be caught in the filter, or when the solids are small enough, solids may pass through the filter. In particular when some solids are preferred to be present in the post-mixed beverage, the filter may be tuned to allow passage of these preferred solids, for example based on typical sizes of the preferred solids.

The filter may have an open-cell structure. For example, the filter may be a sintered filter, formed by sintering of a material such as a copper, stainless steel, any other metal, or a polymer. By virtue of the sintering process, an open-cell structure may be obtained for the filter. By virtue of the cell size of the open-cell structure, solid particles may become trapped while liquid is able to pass through the filter.

The filter may be embodied as a sieve with one or more pores. The pores may have a particular flow-through area or pore size, arranged to catch particles in the beverage concentrate, while allowing the liquid part to flow through the filter.

In embodiment, the pore size of the filter may be between 0.2-100 um (micrometre). More in particular, the pore size of the filter may be between 0.3-50 um, or even between 0.4 - 25 um.

The filter may be formed as a sandwich construction, wherein a filter material is sandwiched between two sandwich plates. The filter material is arranged to catch suspended particles from a flow of beverage concentrate flowing through the filter. The filter material may for example have a granular form, such as diatomite, or kieselguhr, or may be a porous material such as porous ceramic or porous metal. The sandwich plates are arranged to hold the filter material in place between the sandwich plates. A flow of fluid is allowed through the sandwich plates, for example through openings or other passages through the sandwich plates. The openings or other passages are typically not arranged to catch particles suspended in the beverage concentrate.

The filter may be comprised by the cartridge. As such, a cartridge for holding a beverage concentrate envisioned, the cartridge comprising an internal volume for holding the beverage concentrate, and a filter, wherein the filter is designed for filtering particles from a flow of liquid, such a beverage concentrate or post-mixed beverage, passing from the internal volume through the filter. This allows at least part of the particles present in the internal volume to be caught by the filter, resulting in a beverage concentrate or post-mixed beverage with a lower turbidity. The lower turbidity of the beverage concentrate may in turn result in a preferred lower turbidity of the post-mixed beverage.

It will be understood that the flow of liquid passing through the filter may be a mixture, suspension, or dispersion of small particles in a liquid. After having passed through the filter, the flow of liquid comprises less small particles, or even is essentially free of small particles. Small particles for example have a general particle size which is larger than 0.2 pm, larger than 1 pm, in particular between 0.2-100 pm or even between 0.1-50 pm.

Additionally or as an alternative to a filter comprised by the cartridge, a filter may be comprised by the beverage dispenser assembly 100. This filter may be positioned downstream of the reception volume 106 - and in use downstream of the cartridge 200. For example, the filter may be positioned in the post-mixed beverage conduit 114.

In the description above, it will be understood that when an element is referred to as being connect to another element, the element is either directly connected to the other element, or intervening elements may also be present. Also, it will be understood that the values given in the description above, are given by way of example and that other values may be possible and/or may be strived for.

It is to be noted that the figures are only schematic representations of embodiments that are given by way of non-limiting examples. For the purpose of clarity and a concise description, features are described herein as part of the same or separate embodiments, however, it will be appreciated that the scope of the disclosure may include embodiments having combinations of all or some of the features described.

The word 'comprising' does not exclude the presence of other features or steps. Furthermore, the words 'a' and 'an' shall not be construed as limited to 'only one', but instead are used to mean 'at least one', and do not exclude a plurality.

## Claims

1. Method of dispensing a post-mixed beverage from a beverage concentrate, the method comprising the steps of:
- receiving a cartridge comprising a volume of beverage concentrate in a receptacle of a beverage dispenser;
- using a cooling unit of the beverage dispenser, cooling the beverage concentrate to a temperature below a beverage concentrate temperature threshold;
- mixing at least part of the cooled beverage concentrate with one or more base liquids to form a volume of post-mixed beverage; and
- dispensing at least part of the volume of post-mixed beverage.

2. Method according to claim 1, wherein the beverage concentrate is cooled while inside the cartridge.

3. Method according to claim 1 or 2, further comprising steps of:
- expelling the beverage concentrate from the cartridge; and
- cooling the beverage concentrate prior to the mixing of the cooled beverage concentrate with the one or more volumes of base liquid.

4. Method according to any of the preceding claims, further comprising a step of determining a temperature of the base liquid, and wherein the beverage concentrate temperature threshold is at least partially based on the determined temperature of the base liquid.

5. Method according to any of the preceding claims, further comprising a step of determining a temperature of the beverage concentrate inside the cartridge and/or a step of determining a temperature of the beverage concentrate after being expelled from the cartridge, and prior to being mixed with the base liquid.

6. Method according to any of the preceding claims, wherein the beverage concentrate is cooled to a temperature below 0 degrees C.

7. Method according to any of the preceding claims, further comprising a step of cooling the base liquid using the cooling unit of the beverage dispenser.

8. Method according to any of the preceding claims, wherein the beverage concentrate is based on or resembles a fermented beverage, in particular a beer.

9. Method according to any of the preceding claims, wherein a ratio between the beverage concentrate and the base liquid in the post-mixed beverage is 1:5 or more, in particular 1:4 or more.

10. Beverage dispenser (102) for dispensing a post-mixed beverage, the beverage dispenser comprising:
- a dispenser housing (104) comprising a receptacle (106) with a reception volume (107) for receiving at least part of a cartridge (200) holding a volume of beverage concentrate;
- a base liquid input for receiving one or more base liquids; and
- a cooling unit (170) for withdrawing thermal energy from the reception volume and/or for withdrawing thermal energy from a beverage concentrate conduit (112) comprised by the beverage dispenser, which beverage concentrate conduit is in fluid communication with the reception volume for receiving beverage concentrate from a cartridge position in the reception volume.

11. Beverage dispenser (102) according to claim 10, wherein the cooling unit is arranged for withdrawing thermal energy from the reception volume, in particular wherein the beverage dispenser comprises a beverage concentrate conduit (112), which beverage concentrate conduit is in fluid communication with the reception volume for receiving beverage concentrate from a cartridge position in the reception volume, and wherein the cooling unit is arranged for withdrawing thermal energy from the reception volume.

12. Beverage dispenser according to any of the claims 10-11, wherein the cooling unit is further arranged for withdrawing thermal energy from base liquid flowing through the base liquid conduit.

13. Beverage dispenser according to any of the claims 10-12, further comprising a storage compartment for holding a plurality of cartridges each holding a volume of beverage concentrate, and wherein the cooling unit is arranged for cooling the plurality of cartridges held in the storage compartment.

14. Beverage dispenser assembly for forming and dispensing a post-mixed beverage from a beverage concentrate, the assembly comprising a beverage dispenser according to any of the claims 10-13 and a cartridge holding a volume of beverage concentrate, wherein the cartridge is in particular positioned in the receptacle of the beverage dispenser, in particular wherein the beverage concentrate is based on or resembles a fermented beverage, in particular a beer.

15. Beverage dispenser assembly according to claim 14, wherein the beverage dispenser further comprises a beverage concentrate temperature sensor (176) for providing a sensor signal indicative of a temperature of the concentrated beverage in the storage volume of the cartridge.
